(19) **Europäisches Patentamt**

**European Patent Office**

**Office européen des brevets**

(11) Veröffentlichungsnummer : **0 401 624 B1**

(12) # EUROPÄISCHE PATENTSCHRIFT

(45) Veröffentlichungstag der Patentschrift :
**09.06.93 Patentblatt 93/23**

(51) Int. Cl.⁵ : **C01G 49/06**

(21) Anmeldenummer : **90110027.1**

(22) Anmeldetag : **26.05.90**

(54) **Verfahren zur Herstellung von Eisenoxidgelbpigmenten.**

(30) Priorität : **09.06.89 DE 3918894**

(43) Veröffentlichungstag der Anmeldung :
**12.12.90 Patentblatt 90/50**

(45) Bekanntmachung des Hinweises auf die
Patenterteilung :
**09.06.93 Patentblatt 93/23**

(84) Benannte Vertragsstaaten :
**DE ES FR GB IT**

(56) Entgegenhaltungen :
**US-A- 1 327 061**
**US-A- 4 221 766**

(73) Patentinhaber : **BAYER AG**
**W-5090 Leverkusen 1 Bayerwerk (DE)**

(72) Erfinder : **Kröckert, Bernd, Dr.**
**Brauerstrasse 14**
**W-4230 Wesel (DE)**
Erfinder : **Printzen, Helmut, Dr.**
**Heckschenstrasse 93**
**W-4150 Krefeld 1 (DE)**
Erfinder : **Ganter, Karl-Werner, Dr.**
**Bethelstrasse 13**
**W-4150 Krefeld (DE)**
Erfinder : **Buxbaum, Gunter, Dr.**
**Holzapfelweg 2**
**W-4150 Krefeld 1 (DE)**

EP 0 401 624 B1

Jouve, 18, rue Saint-Denis, 75001 PARIS

**Beschreibung**

Die vorliegende Erfindung betrifft ein Verfahren zur Herstellung von Eisenoxidgelbpigmenten nach dem Penniman-Zoph-Verfahren aus den Rohstoffen Eisen(II)sulfat, Natronlauge und metallischem Eisen, wobei in Gegenwart von Goethit-Keimen Eisen (II) durch Begasung mit Luft zu Eisen (III) oxidiert werden, das Eisen(III)sulfat unter Bildung von Eisen (II) auflöst und die Goethit-Keime zu Eisenoxidgelbpigmenten aufgebaut werden.

Eisenoxidpigmente lassen sich nach dem Anilinverfahren, dem Fällungsverfahren und dem Penniman-Zoph-Prozeß herstellen (Winnacker-Küchler, Chemische Technologie, Band 3, Anorg. Technologie II, 4. Aufl. 1983, S. 376-380).

Das Anilinverfahren bei dem Nitrobenzol durch metallisches Eisen zu Anilin reduziert wird, ist apparativ aufwendig, da mit chloridhaltigen Suspensionen gearbeitet wird und somit die Korrosion der Apparaturen sehr hoch ist.

Beim Fällverfahren wird Eisen(II) z.B. aus Eisen-II-sulfat durch Sauerstoff zu Eisen-III oxidiert. Die bei der Pigmentbildung freiwerdenden Protonen werden durch Natronlauge neutralisiert. Es entsteht somit pro Mol Eisensulfat ein Mol Natriumsulfat, das als Salzlast anfällt.

$$\text{Gl.1: } 2\,FeSO_4 + 4\,NaOH + 0{,}5\,O_2 \rightarrow 2\,FeOOH + 2\,Na_2SO_4 + H_2O$$

Aus ökologischer Sicht ist das Penniman-Verfahren dem Fällverfahren vorzuziehen, da hier das eingesetzte Eisensulfat nur katalytisch wirkt und somit die Salzlast wesentlich reduziert wird. Das Arbeiten in Edelstahlgefäßen ist hier problemlos möglich, da die Korrosionswirkung von Sulfatlösungen wesentlich geringer ist als die von Chloridlösungen.

Beim üblichen Penniman-Verfahren, US-A 1 327 061 und US-A 1 368 748, werden Goethitkeime, die unabhängig aus Eisen-II-sulfat und Natronlauge hergestellt werden (Gl.1), zu Pigmenten aufgebaut. Die Pigmentbildung aus den Goethitkeimen erfolgt in Apparaturen, in denen Eisenschrott, der sich auf Siebböden oder in Körben befindet, von einer Suspension aus Eisen-II-sulfat und den Keimen unter Begasung mit Luft umspült wird. Ein wesentlicher Nachteil beim üblichen Penniman-Prozeß ist darin begründet, daß die Begasung der Suspension mit Luft erfolgen muß und so große Mengen an Wärme in Form von Wasserdampf verloren geht. Da beim Penniman-Prozeß Wasserstoff entsteht, ist es aus sicherheitstechnischen Gründen notwendig, den Prozeß bei > 85°C durchzuführen, da nur so ein ausreichend hoher Dampfgehalt über der Suspension die Bildung eines zündfähigen Gemisches unmöglich macht. Dies bedeutet, daß eine Energieeinsparung durch niedrigere Reaktionstemperaturen bei der Begasung mit Luft nicht möglich ist. Die Begasung mit reinem Sauerstoff oder mit Sauerstoff angereicherter Luft ist in einer üblichen Penniman-Apparatur äußerst bedenklich, da sich dann explosive Gasgemische bilden können.

Reaktionen beim Penniman-Prozeß

$$\text{Gl. 2: } 2\,FeSO_4 + 3H_2O + 0{,}5\,O_2 \rightarrow 2\,FeOOH + 2\,H_2SO_4$$

$$\text{Gl. 3: } 2\,Fe + 2\,H_2SO_4 \rightarrow 2\,FeSO_4 + 2\,H_2$$

Die Gasausnutzung in üblichen Apparaturen des Penniman-Verfahrens ist zudem sehr unbefriedigend, da das Gas am vorhandenen Schrott leicht koalesziert und dann in Form großer Blasen fast wirkungslos die Suspension verläßt.

In den Schutzrechten US-A 2 111 726, US-A 1 327 061 und DD-A 208 599 werden verschiedene Reaktortypen beschrieben, die die ausgeführten Nachteile aufweisen. In der DD-A 208 599 wird mit Figur 3 ein Prozeß offenbart, der in der angegebenen Form bedenklich ist. Hier wird der Eisenschrott in einem eigenen Reaktor gelagert, und die Begasung der sauren Suspension soll laut dieser Abbildung vor dem Reaktor mit Schrott erfolgen. Eine solche Anordnung ist kritisch, da bei üblichen Bedingungen des Prozesses (US-A 1 327 061 und US 1 368 748) zündfähige Gemische entstehen können.

Aufgabe dieser Erfindung ist es, ein Verfahren zur Herstellung von Eisenoxidgelbpigmenten nach dem Pinnman-Verfahren zur Verfügung zu stellen, welches die beschriebenen Nachteile des Standes der Technik nicht aufweist.

Überraschenderweise ist es möglich, das Penniman-Verfahren in zwei Stufen zu trennen und so die beschriebenen Nachteile zu umgehen. Die Schrottauflösungen und die Begasung erfolgen in zwei getrennten Behältern.

Gegenstand der Erfindung ist somit ein Verfahren zur Herstellung von Eisenoxidgelbpigmenten nach dem Penniman-Zoph-Verfahren aus den Rohstoffen Eisen(II)sulfat, Natronlauge und metallischem Eisen, wobei in Gegenwart von Goethit-Keimen Eisen(II) durch Begasung mit Luft zu Eisen(III) oxidiert werden, das Eisen(III)sulfat unter Bildung von Eisen(II) auflöst und die Goethit-Keime zu Eisenoxidgelbpigmenten aufgebaut werden, dadurch gekennzeichnet, daß die Begasung und die Metallauflösung in getrennten Behältern durchgeführt werden.

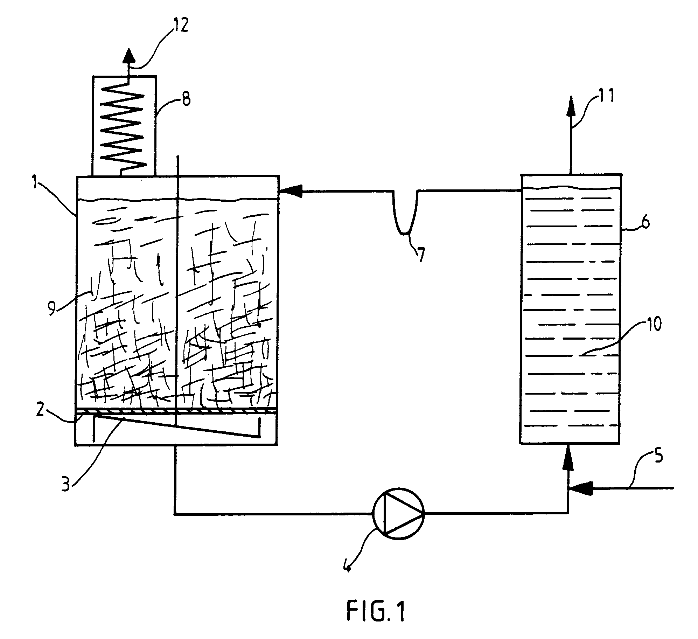

In Fig. 1 ist eine Apparatur skizziert, in der das erfindungsgemäße Verfahren durchgeführt werden kann.

Hierin bedeuten

1 = Metallösebehälter
2 = Siebboden
3 = Unterflurrührer
4 = Pumpe
5 = Gaseintrag über Zweistoffdüsen
6 = Begasungsbehälter
7 = Siphon
8 = Kondensator
9 = Eisenschrott
10 = Suspension
11 = Gasaustrag
12 = Wasserstoffaustrag

Im mit Schrott gefüllten Metallösebehälter (1) wird durch die saure Suspension (10) der Schrott (9) unter Wasserstoffentwicklung (12) aufgelöst. Der Wasserstoff kann im Gemisch mit Erdgas als nicht explosionsfähiges Gemische abtransportiert und z.B. in einem Kraftwerk verwendet werden.

In einer bevorzugten Ausführungsform des erfindungsgemäßen Verfahrens wird also der im Metallösebehälter entstehende Wasserstoff kontrolliert abgeführt. Vorteilhaft wird dann aus dem Metallösebehälter metall-freie Suspension über eine Pumpe in den Begasungsbehälter geleitet. Diese Suspension ist mit Eisen(II) angereichert bei vermindertem Protonen-Gehalt.

Hierbei ist es möglich, die Begasung mit Zweistoffdüsen (5) oder mit Begasungsschlangen am Kesselboden durchzuführen. Nach erfolgter Oxidation und anschließender Hydrolyse läuft die Suspension (10) zurück in den Metallösebehälter. Hierbei ist es wichtig, daß die Gasräume beider Behälter getrennt gehalten werden, z.B. durch einen Siphon (7).

Wird der Metallösebehälter (1) als Spitzkessel ausgelegt, dann kann auf den Unterflurrührer (4) verzichtet werden.

Je nach Kapazität des Metallösebehälters (1) sind dessen Abmessungen so zu wählen, daß z.B. beim Arbeiten mit losem Schrott der Durchmesser größer wird, so daß ein leichtes Bestücken möglich ist. Wird mit Schrottpaketen gearbeitet, ist eine schmale Bauweise des Behälters möglich.

Ebenso sind mehrere Varianten des Begasungsbehälters (6) möglich. Er kann als Spitzkessel, aber auch als Blasensäule - je nach Anwendung - ausgelegt werden. Da in der Schrottlösebütte Wasserstoff entsteht, ist es aus sicherheitstechnischen Gründen sinnvoll, oberhalb der Suspension im Metallösebehälter (1) Wasserdampfventile vorzusehen, um bei möglichen Wasserstoffanreicherungen den Gasraum durch Wasserdampf zu inertisieren.

Die Art der Pumpe (4) ist im wesentlichen von der Anlagengröße abhängig und muß entsprechend angepaßt werden. Die Pumpgeschwindigkeit ist abhängig vom Pigment, das hergestellt werden soll. Um Metallteilchen von der Pumpe fernzuhalten und um deren Übertritt im Begasungsbehälter zu vermeiden, ist es sinnvoll, vor die Pumpe ein feinmaschiges Sieb und/oder eine Magnetscheidung anzubringen. Bevorzugt wird die metall-freie Suspension vor oder in der Pumpe entgast.

In einer bevorzugten Ausführungsform des erfindungsgemäßen Verfahrens beträgt die Temperatur im Begasungsbehälter 20 bis 100°C, bevorzugt 60 bis 90°C.

Am Anfang der Reaktion beträgt die Keimmenge vorteilhaft 0 bis 20 g/l, bevorzugt 0,5 bis 15 g/l. Bevorzugt liegen am Anfang der Reaktion 5 bis 80 g/l, besonders bevorzugt 10 bis 60 g/l $FeSO_4$ vor.

Bevorzugt wird die metall-freie Suspension vor oder in der Pumpe entgast.

Die Vorteile der in Fig. 1 dargestellten Anordnung sind vielfältig. Wird mit Luft begast, dann erfolgt der Wärmeaustrag nur aus dem Begasungsbehälter, während der zweite Teil der Suspension nahezu keinen Wärmeverlust erfährt. Begast man mit Sauerstoff, was hier vorteilhaft möglich ist, da die Gasräume getrennt sind und eine Vermischung von Wasserstoff mit Sauerstoff nicht erfolgt, dann wird auch im Begasungsbehälter der Wärmeaustrag sehr gering. Er ergibt sich im Idealfall nur noch aus dem Dampfdruck des Wassers.

Ein weiterer Vorzug der separaten Begasung ist darin zu sehen, daß bei der Begasung die Gasblasen nicht mehr koalizieren und so eine wesentlich bessere Gasverteilungsgsbütte gewährleistet ist.

Für die Koloristik der Pigmente ergeben sich durch die Verfahrensweise keine Nachteile. Bei den durchgeführten Versuchen waren die Farbwerte immer besser als bei vergleichbaren Versuchen in einer üblichen Penniman-Apparatur.

Der Wärmeaustrag läßt sich durch den sogenannten Wärmefluß Q beschreiben:

$$Q = \frac{Pw}{P - Pw} \quad \Phi g \quad \Delta Hw$$

Es bedeuten:

P = Gesamtdruck (bar)
Pw = Dampfdruck des Wassers bei Reaktionstemperatur (bar)
Φ g = Mengenfluß des Gases (mol/h)
Hw = Verdampfungswärme des Wassers (kJ/mol)
Q = Wärmefluß oder Leistungsabgabe (kJ/h)

Somit ist der Wärmefluß ein Maß für die Wärmemenge, die pro Stunde das System verläßt. Die Angaben in den Beispielen beziehen sich auf 85°C heiße Suspensionen und sind mit den Verdampfungswärmen von reinem Wasser gerechnet, d.h., die Angaben geben nun ein qualitatives Maß für den Wärmeaustrag.

Die Farbtöne aller Proben sind in Alkydal® F 48, Handelsprodukt der Bayer AG, einem mittelöligen Alkydharz, bei einer Pigmentvolumenkonzentration von 10 % gemäß DIN 6174 (äquivlent ISO DIN 7724, 1-3 drafts) ermittelt.

Nachfolgend wird die Erfindung beispielhaft beschrieben, womit keine Einschränkung auf die Beispiele verbunden ist.

Beispiel 1

Keimherstellung:

Eine wäßrige Lösung von Eisen-II-sulfat mit 200 g/l FeSO wird mit soviel 30 %iger Natronlauge unter Rühren versetzt, daß 40 % des Eisens als Eisen-II-hydroxid gefällt werden können. Durch Begasung mit Luft bei Temperaturen von 30 bis 35°C wird FeII zu FeIII oxidiert; dabei fällt der pH-Wert von 6 auf 3,5. Damit ist die Keimbildung beendet.

Der Pigmentaufbau erfolgt in einer Apparatur nach Fig. 1. Im angegebenen Versuch liegt die Suspensionsmenge im Begasungsbehälter (6) bei 30 l ohne Gaseintrag. Im Metallösebehälter (1) befindet sich eine Suspensionsmenge von 60 l. Hierzu werden 90 g/l Eisenschrott, bezogen auf die Gesamtsuspension, gegeben. Die Suspension wird so hergestellt, daß 7 g/l Keim, gerechnet als FeOOH, und 40 g/l $FeSO_4$ vorliegen. Die Suspension wird mit 400 l/h umgepumpt und auf 85°C erhitzt. Sind 85°C erreicht, werden in den Begasungskessel 600 l/h Luft über eine Zweistoffdüse am Boden eingeleitet. Nach 64 Stunden ist das Pigment ausreichend aufgebaut. Es wird filtriert, salzfrei gewaschen und bei 120°C getrocknet.

Die aufgelisteten Farbwerte zeigen, daß das erhaltene Produkt eine bessere Koloristik aufweist als ein Produkt, das unter sonst gleichen Bedingungen, aber in einer üblichen Penniman-Apparatur hergestellt wurde. Positive Werte für ΔL∗ und ΔC∗ geben die Verbesserung an.

| | | L* | a* | b* | C* | h |
|---|---|---|---|---|---|---|
| Produkt, Beispiel 1 | X | 59,1 | 10,9 | 45,9 | 47,2 | 76,6 |
| Vergleichsprodukt | Y | 58,9 | 10,9 | 44,9 | 46,2 | 76,4 |
| ΔX zu Y | | +0,2 | 0 | +1,0 | +1,0 | +0,2 |

Die Wärmemenge, die pro Stunde das System verläßt, beträgt im durchgeführten Versuch nur ein Drittel der Menge, die bei konventioneller Fahrweise freigesetzt wird.

Im vorliegenden Falle ergibt sich bei 85°C eine Verdampfungsenthalpie ΔHw von 41,4 kJ/mol. Daraus errechnet sich bei einer Gasmenge von 600 l/h ein Wärmeaustrag von 1519 kJ/h oder 422 Watt statt 4557 kJ/h oder 1266 Watt in üblichen Penniman-Apparaturen.

Beispiel 2

Die Durchführung erfolgt wie in Beispiel 1, aber es wird mit 60 l/h reinem Sauerstoff begast.

Es ergibt sich für den Wärmeaustrag ein Wert von 152 kJ/h oder 42 Watt statt 4557 kJ/h oder 1266 Watt in einer üblichen Penniman-Apparatur.

Die Farbwerte sind besser als beim Vergleichsversuch in einer üblichen Penniman-Apparatur.

|  | $L^*$ | $a^*$ | $b^*$ | $c^*$ | h |
|---|---|---|---|---|---|
| Produkt, Beispiel 2 Z | 59,5 | 10,8 | 45,6 | 46,9 | 76,7 |
| Vergleichsprodukt Y | 58,9 | 10,9 | 44,9 | 46,2 | 76,4 |
| $\Delta$Z zu Y | +0,6 | -0,1 | +0,7 | +0,7 | +0,3 |

**Patentansprüche**

1. Verfahren zur Herstellung von Eisenoxidgelbpigmenten nach dem Penniman-Zoph-Verfahren aus den Rohstoffen Eisen(II)sulfat, Natronlauge und metallischem Eisen, wobei in Gegenwart von Goethit-Keimen Eisen(II) durch Begasung mit Luft zu Eisen (III) oxidiert werden, das Eisen(III)sulfat unter Bildung von Eisen(II) auflöst und die Goethit-Keime zu Eisenoxidgelbpigmenten aufgebaut werden, dadurch gekennzeichnet, daß die Begasung und die Metallauflösung in getrennten Behältern durchgeführt werden.

2. Verfahren gemäß Anspruch 1, dadurch gekennzeichnet, daß der im Metallösebehälter entstehende Wasserstoff kontrolliert abgeführt wird.

3. Verfahren gemäß einem der Ansprüche 1 oder 2, dadurch gekennzeichnet, daß aus dem Metallösebehälter metall-freie Suspension über eine Pumpe in den Begasungsbehälter geleitet wird.

4. Verfahren gemäß Anspruch 3, dadurch gekennzeichnet, daß die metall-freie Suspension vor oder in der Pumpe entgast wird.

5. Verfahren gemäß einem oder mehrerer der Ansprüche 1 bis 4, dadurch gekennzeichnet, daß die Temperatur im Begasungsbehälter 20 bis 100°C, bevorzugt 60 bis 90°C, beträgt.

6. Verfahren gemäß einem oder mehrerer der Ansprüche 1 bis 5, dadurch gekennzeichnet, daß am Anfang der Reaktion die Keimmenge 0 bis 20 g/l, bevorzugt 0,5 bis 15 g/l, gerechnet als FeOOH, beträgt.

7. Verfahren gemäß einem oder mehrerer der Ansprüche 1 bis 6, dadurch gekennzeichnet, daß am Anfang der Reaktion 5 bis 80 g/l, bevorzugt 10 bis 60 g/l, $FeSO_4$ vorliegen.

8. Verfahren gemäß einem oder mehrerer der Ansprüche 1 bis 7, dadurch gekennzeichnet, daß die Begasung mit Sauerstoff durchgeführt wird.

**Claims**

1. Process for preparing yellow iron oxide pigments according to the Penniman-Zoph process from the raw materials iron (II) sulphate, caustic-soda solution and metallic iron, whereby iron (II) is oxidised to iron (III) by gassing with air in the presence of goethite nuclei, the iron (III) sulphate dissolves subject to the formation of iron (II) and the goethite nuclei are built up to form yellow iron oxide pigments, characterised in that gassing and dissolving of the metal are carried out in separate containers.

2. Process according to Claim 1, characterised in that the hydrogen evolving in the container for the metallic solution is drawn off in controlled manner.

3. Process according to one of Claims 1 or 2, characterised in that metal-free suspension is conveyed from the container for the metallic solution to the gassing container via a pump.

4. Process according to Claim 3, characterised in that the metal-free suspension is degassed upstream of or in the pump.

5. Process according to one or several of Claims 1 to 4, characterised in that the temperature in the gassing container amounts to 20 to 100°C, preferably 60 to 90°C.

6. Process according to one or several of Claims 1 to 5, characterised in that the quantity of nuclei at the start of the reaction amounts to 0 to 20 g/l, preferably 0.5 to 15 g/l, calculated as FeOOH.

7. Process according to one or several of Claims 1 to 6, characterised in that 5 to 80 g/l, preferably 10 to 60 g/l, $FeSO_4$ are present at the start of the reaction.

8. Process according to one or several of Claims 1 to 7, characterised in that gassing is carried out with oxygen.

**Revendications**

1. Procédé de production de pigments jaunes d'oxyde de fer suivant le procédé Penniman-Zoph à partir des matières premières sulfate de fer (II), lessive de soude et fer métallique, dans lequel du fer (II) est oxydé en fer (III) en présence de germes de goethite par introduction d'air, le sulfate de fer (III) étant dissous avec formation de fer (II) et les germes de goethite s'édifiant en pigments jaunes d'oxyde de fer, caractérisé en ce que l'introduction de gaz et la dissolution du métal sont effectuées dans des récipients séparés.

2. Procédé suivant la revendication 1, caractérisé en ce que l'hydrogène produit dans le récipient de dissolution du métal est éliminé de façon contrôlée.

3. Procédé suivant l'une des revendications 1 et 2, caractérisé en ce qu'une suspension dépourvue de métal est transférée depuis le récipient de dissolution du métal par une pompe dans le récipient d'introduction de gaz.

4. Procédé suivant la revendication 3, caractérisé en ce que la suspension dépourvue de métal est dégazée en amont de la pompe ou dans la pompe.

5. Procédé suivant une ou plusieurs des revendications 1 à 4, caractérisé en ce que la température dans le récipient d'introduction de gaz s'élève à 20-100°C, de préférence à 60-90°C.

6. Procédé suivant une ou plusieurs des revendications 1 à 5, caractérisé en ce qu'au début de la réaction, la quantité de germes est de 0 à 20 g/l, de préférence de 0,5 à 15 g/l, exprimée en FeOOH.

7. Procédé suivant une ou plusieurs des revendications 1 à 6, caractérisé en ce qu'il y a au début de la réaction 5 à 80 g/l, de préférence de 10 à 60 g/l de $FeSO_4$.

8. Procédé suivant une ou plusieurs des revendications 1 à 7, caractérisé en ce que l'apport de gaz s'effectue avec de l'oxygène.

FIG.1